# EUROPÄISCHE PATENTANMELDUNG

(11) **EP 4 711 725 A1**
(43) Veröffentlichungstag der Anmeldung: **18.03.2026**
(21) Anmeldenummer: 25202329.6
(22) Anmeldetag: 16.09.2025
(51) Int. Cl.: G01F 1/05, G01F 1/10, G01F 15/18, G01F 1/28, F24F 11/00, F24F 11/89, G01P 13/00, G01P 1/02

(54) **GASSTRÖMUNGSMESSVORRICHTUNG**

(30) Priorität: 17.09.2024 DE 102024126679
(71) Anmelder: Viessmann Holding International GmbH, 35108 Allendorf (Eder) (DE)
(72) Erfinder: Paul, Mathis, 52355 Düren (DE); Röder, Tim, 40476 Düsseldorf (DE); Wahidi, Mohammad, 52062 Aachen, (DE)
(74) Vertreter: Wolf & Wolf Patentanwaltsgesellschaft mbH

(57) **Zusammenfassung**

Die Erfindung betrifft eine Gasströmungsmessvorrichtung, umfassend eine zur Einregulierung einer Gebäude-Lüftungsanlage dienende Messeinrichtung (1) zur Erfassung einer Gasströmung. Nach der Erfindung ist vorgesehen, dass an der einer Ermittlung des Volumenstroms dienenden Messeinrichtung (1) zu ihrer lösbaren Schnellfixierung an einer die Gasströmung bereitstellenden Gasaustrittsöffnung eine Befestigungsschnittstelle (2) vorgesehen ist. Die Erfindung betrifft außerdem eine Gasaustrittsöffnung mit der vorgenannten Gasströmungsmessvorrichtung.

## Beschreibung

Die Erfindung betrifft eine Gasströmungsmessvorrichtung gemäß dem Oberbegriff des Patentanspruchs 1.

Eine Gasströmungsmessvorrichtung der eingangs genannten Art wird zum Beispiel von der Firma Wöhler hergestellt und vertrieben. Ein Prospekt zu dieser Gasströmungsmessvorrichtung ist den Anmeldungsunterlagen beigefügt und war zum Anmeldezeitpunkt unter https://www.woehler.de/fileadmin/user_upload/ woehler/resources/downloads/products/swf4000/manual/23871_BDA_ SWF_4000_de.pdf herunterladbar. Diese Gasströmungsmessvorrichtung besteht dabei aus einer zur Einregulierung einer Gebäude-Lüftungsanlage dienenden Messeinrichtung zur Erfassung einer Gasströmung, wobei der Massendurchfluss mit Hilfe eines Hitzdrahtes bestimmt wird, d. h. es handelt sich bei diesem Gerät um ein sogenanntes Hitzdraht-Anemometer.

Der Erfindung liegt die Aufgabe zugrunde, eine Gasströmungsmessvorrichtung der eingangs genannten Art zu verbessern. Insbesondere soll eine bei einer Einregulierung einer Gebäude-Lüftungsanlage leichter handhabbare Gasströmungsmessvorrichtung geschaffen werden.

Diese Aufgabe ist mit einer Gasströmungsmessvorrichtung der eingangs genannten Art durch die im Kennzeichen des Patentanspruchs 1 aufgeführten Merkmale gelöst.

Nach der Erfindung ist also vorgesehen, dass an der einer Ermittlung des Volumenstroms dienenden Messeinrichtung zu ihrer lösbaren Schnellfixierung an einer die Gasströmung bereitstellenden Gasaustrittsöffnung eine Befestigungsschnittstelle vorgesehen ist.

Mit anderen Worten zeichnet sich die erfindungsgemäße Lösung somit dadurch aus, dass sie im Unterschied zum eingangs genannten Stand der Technik nicht mehr von Hand vor eine Gasaustrittsöffnung gehalten werden muss, sondern dort mit Hilfe der erfindungsgemäßen Befestigungsschnittstelle fixierbar ist bzw. fixiert werden kann. Insbesondere bei der Einregulierung einer Gebäude-Lüftungsanlage, bei der als Gas also Luft vorgesehen ist, wird durch diese temporäre, aber sehr präzise Positionierbarkeit die Messarbeit erheblich vereinfacht.

Dabei ist ferner und wiederum im Unterschied zum vorgenannten Stand der Technik besonders bevorzugt vorgesehen, dass die Messeinrichtung einen von der Gasströmung umströmten und beweglich gelagerten Flügel aufweist. Die Messung erfolgt erfindungsgemäß somit nicht (mehr) per Hitzdraht, sondern über eine Messung der Auslenkung des besagten Flügels, was bei freier Beweglichkeit des Flügels zum Beispiel auch einer Messung der Drehzahl bzw. Rotationsgeschwindigkeit des Flügels entsprechen kann, wobei darüber hinaus besonders bevorzugt vorgesehen ist, dass die Messeinrichtung bezüglich der den Flügel umströmenden Gasströmung strömungsführungsfrei ausgebildet ist. Die Maßgabe "strömungsführungsfrei" bedeutet dabei, dass an der erfindungsgemäßen Messeinrichtung selbst vorzugsweise keine Strömungsführung vorgesehen ist, d. h. der besagte Flügel wird erfindungsgemäß einfach direkt vor der Gasaustrittsöffnung positioniert und vom ausströmenden Gas umströmt und dabei bewegt bzw. ausgelenkt.

Sollten dabei, worauf weiter unten nochmals genauer eingegangen wird, an der Gasaustrittsöffnung Leitschaufeln bzw. Leitwerkschaufeln oder dergleichen vorgesehen sein bzw. werden, so wäre dies aber selbstverständlich auch nicht hinderlich für die Umsetzung der erfindungsgemäßen Lösung.

Mit etwas mehr Abstand betrachtet, ist weiterhin besonders bevorzugt vorgesehen, dass die Gasströmungsmessvorrichtung mit einer Gasaustrittsöffnung kombiniert ist, d. h. es wird erfindungsgemäß auch eine Gasaustrittsöffnung mit einer Gasströmungsmessvorrichtung beansprucht, die sich insbesondere dadurch auszeichnet, dass an der Gasaustrittsöffnung eine zur Befestigungsschnittstelle passende Gegenbefestigungsschnittstelle vorgesehen ist. Diese Gegenbefestigungsschnittstelle kann dabei, worauf weiter unten noch genauer eingegangen wird, zum Beispiel in Form spezieller Befestigungsmittel ausgebildet sein, es kann aber auch sein, dass die Befestigungsschnittstelle einen Magneten umfasst und die Gegenbefestigungsschnittstelle an der Gasaustrittsöffnung einfach aus ferromagnetischem Material, insbesondere aus magnetisierbarem Metall, gebildet ist, so dass an der Gasaustrittsöffnung keine weiteren Maßnahmen zur Ausbildung der Gegenbefestigungsschnittstelle erforderlich sind. Besonders bevorzugt ist dabei bei allen denkbaren Möglichkeiten vorgesehen, dass die Befestigungsschnittstelle und die Gegenbefestigungsschnittstelle zusammen eine Schnellverbindungseinrichtung bilden, wobei es diesbezüglich insbesondere darum geht, dass sich die Befestigungsschnittstelle und die Gegenbefestigungsschnittstelle zerstörungsfrei und besonders bevorzugt werkzeugfrei voneinander lösen lassen, was wiederum die Handhabbarkeit der erfindungsgemäßen Lösung erheblich verbessert bzw. vereinfacht.

Andere vorteilhafte Weiterbildungen ergeben sich aus den abhängigen Patentansprüchen.

Der Vollständigkeit halber wird noch auf das Dokument CN 206945730 U hingewiesen, aus dem eine Gasströmungsmessvorrichtung zur Messung einer Windgeschwindigkeit an einem Hochspannungsmast bekannt ist. Diese als Flügelanemometer arbeitende Lösung ist dabei fest innerhalb einer Strömungsführung verbaut.

Die erfindungsgemäße Gasströmungsmessvorrichtung einschließlich ihrer vorteilhaften Weiterbildungen gemäß der abhängigen Patentansprüche wird nachfolgend anhand der zeichnerischen Darstellung mehrerer Ausführungsbeispiele näher erläutert.

Es zeigt
- Figur 1: perspektivisch und als Explosionsdarstellung eine erste Ausführungsform der erfindungsgemäßen Gasströmungsmessvorrichtung mit einer Feder und einem Drehanschlag;
- Figur 2: perspektivisch von unten die Gasströmungsmessvorrichtung gemäß Figur 1 mit Drehanschlag, Skala und Zeiger;
- Figur 3: perspektivisch von oben die Gasströmungsmessvorrichtung gemäß Figur 1 mit der Befestigungsschnittstelle;
- Figur 4: perspektivisch und als Explosionsdarstellung eine Gasaustrittsöffnung mit der Gasströmungsmessvorrichtung mit der Feder und dem Drehanschlag;
- Figur 5: perspektivisch von unten die zusammengebaute Kombination gemäß Figur 4;
- Figur 6: im Schnitt die zusammengebaute und in einer Raumdecke eingebaute Kombination gemäß Figur 4;
- Figur 7: perspektivisch und als Explosionsdarstellung eine zweite Ausführungsform der erfindungsgemäßen Gasströmungsmessvorrichtung ohne Feder und ohne Drehanschlag;
- Figur 8: perspektivisch von oben die Gasströmungsmessvorrichtung gemäß Figur 7 mit der Befestigungsschnittstelle;
- Figur 9: perspektivisch und als Explosionsdarstellung eine Gasaustrittsöffnung mit der Gasströmungsmessvorrichtung ohne Feder und ohne Drehanschlag;
- Figur 10: perspektivisch von unten die zusammengebaute Kombination gemäß Figur 7;
- Figur 11: im Schnitt die zusammengebaute Kombination gemäß Figur 7;
- Figur 12: perspektivisch von oben die zusammengebaute Kombination gemäß Figur 7; und
- Figur 13: perspektivisch als weitere Ausführungsform die Gasaustrittsöffnung mit Leitschaufeln.

Die in den Figuren dargestellte Gasströmungsmessvorrichtung besteht grundsätzlich aus einer zur Einregulierung einer Gebäude-Lüftungsanlage dienenden Messeinrichtung 1 zur Erfassung einer Gasströmung, wobei es sich dabei bevorzugt um eine Luftströmung handelt. Wesentlich für alle Ausführungen der erfindungsgemäßen Gasströmungsmessvorrichtung ist, dass an der einer Ermittlung des Volumenstroms dienenden Messeinrichtung 1, die man also auch als Volumenstrommesseinrichtung bezeichnen könnte, zu ihrer lösbaren Schnellfixierung an einer die Gasströmung bereitstellenden Gasaustrittsöffnung eine Befestigungsschnittstelle 2 vorgesehen ist. Diese dient, wie eingangs bereits erläutert, dazu, die Gasströmungsmessvorrichtung möglichst effizient an der Gasaustrittsöffnung befestigen zu können und nicht mehr, wie beim eingangs genannten Stand der Technik, in der Hand halten zu müssen. Dazu ist, worauf weiter unten noch genauer eingegangen wird, besonders bevorzugt vorgesehen, dass die Befestigungsschnittstelle 2 einen mit der Gasaustrittsöffnung verbindbaren Magneten umfasst.

Noch etwas genauer betrachtet, ist dabei bevorzugt vorgesehen, dass die Messeinrichtung 1 eine Basis 1.1 mit der Befestigungsschnittstelle 2 aufweist. Außerdem ist bevorzugt vorgesehen, dass die Messeinrichtung 1 einen von der Gasströmung umströmten und beweglich an der Basis 1.1 gelagerten Flügel 1.2 aufweist. Der Begriff "Flügel" umfasst dabei solche Bauteile, die bei einer Gasumströmung bzw. einer Anströmung, die auch nicht senkrecht bzw. schräg zum Flügel orientiert sein kann, eine Kraft in eine bestimmte Richtung erzeugen. Die Messeinrichtung 1 besteht somit bevorzugt insbesondere einerseits aus der an der Gasaustrittsöffnung zu befestigenden bzw. befestigten Basis 1.1 und andererseits aus dem beweglich, vorzugsweise drehbeweglich, an der Basis 1.1 gelagerten Flügel 1.2.

Wie aus den Figuren ersichtlich, ist bei alledem weiterhin besonders bevorzugt vorgesehen, dass der Flügel 1.2 als radial durchströmtes Laufrad ausgebildet ist. Noch etwas genauer betrachtet, ist dabei ferner bevorzugt vorgesehen, dass das Laufrad eine scheibenförmige Laufradbasis 1.2.1 und an einem Umfang der Laufradbasis 1.2.1 verteilt angeordnete und vorzugsweise senkrecht zur Laufradbasis 1.2.1 stehende Laufradschaufeln 1.2.2 aufweist. Dabei sind die besagten Laufradschaufeln 1.2.2 vorzugsweise für eine Umströmung vom Inneren des Laufrads radial nach außen ausgebildet, was, wie ohne weiteres ersichtlich, an jeder Laufradschaufel 1.2.2 eine angreifende Kraft und damit insgesamt ein auf das Laufrad wirkendes Drehmoment hervorruft.

Die Laufradschaufeln 1.2.2 müssen dabei nicht, wie dargestellt, alle identisch ausgebildet und/oder gleichmäßig verteilt über den Umfang der Laufradbasis 1.2.1 angeordnet sein. Vielmehr können die Flügel 1.2 auch ungleichmäßig über den Umfang verteilt angeordet und/oder auch einfach als ebene Plättchen oder dergleichen ausgebildet und/oder unterschiedlich schräg angestellt angeordnet sein.

Weiterhin ist zur weiteren Verbesserung der Strömungsführung bevorzugt vorgesehen (aber nicht extra dargestellt), dass an den der Laufradbasis 1.2.1 gegenüberliegenden Ende der Flügel 1.2 ein zusätzliches Strömungsführungselement angeordnet ist, das vorzugsweise als ebenflächiger Ring (vergleichbar mit dem äußeren Rand der Laufradbasis 1.2.1) ausgebildet ist.

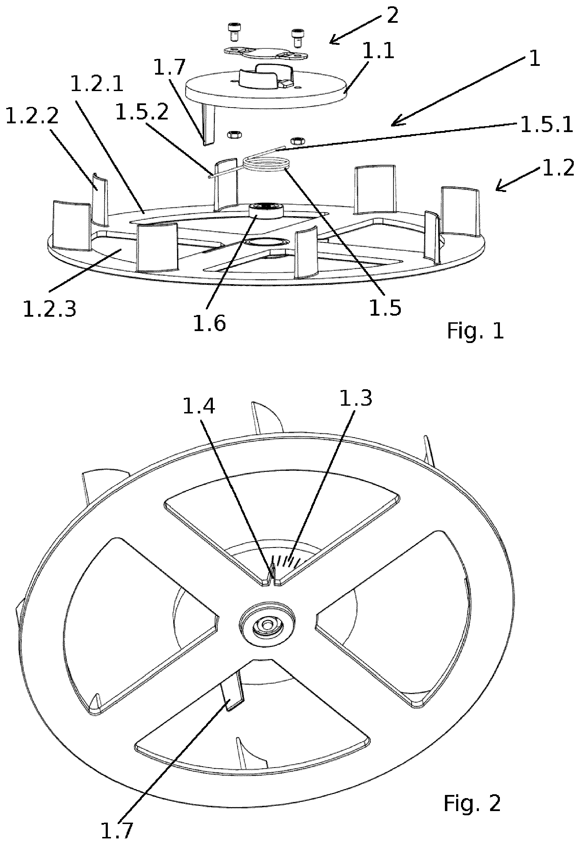

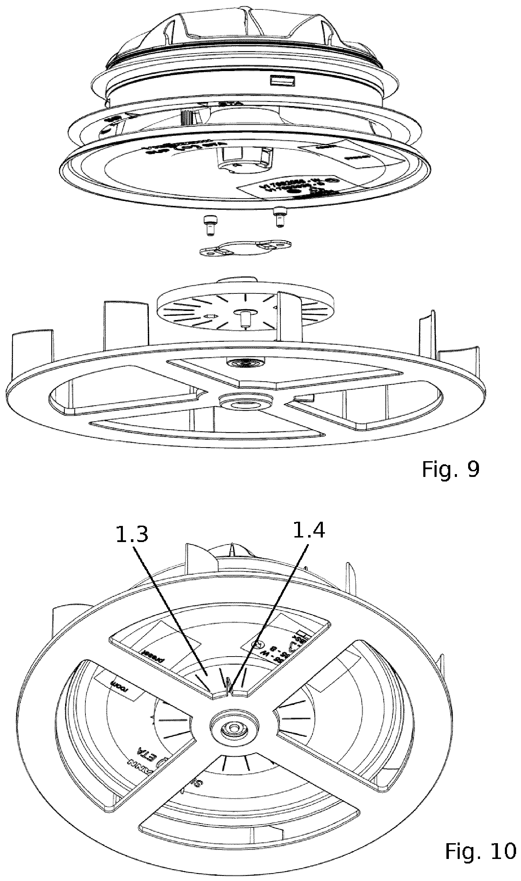

Um das vorgenannte Drehmoment für die angestrebte Messung der Gasströmung nutzen zu können, ist dabei weiterhin bevorzugt vorgesehen, dass an der Basis 1.1 eine Skala 1.3 und am Flügel 1.2 ein einen Wert auf der Skala 1.3 anzeigender Zeiger 1.4 angeordnet ist (siehe hierzu insbesondere Figur 2 und Figur 10), oder es ist eine entsprechend umgekehrte Anordnung vorgesehen. Dabei ist weiterhin bevorzugt vorgesehen, dass der Flügel 1.2 eine eine Durchsicht auf die Basis 1.2 gewährende Durchbrechung 1.2.3 aufweist, wobei in diesem Fall der Zeiger 1.4 besonders bevorzugt an der besagten Durchbrechung 1.2.3. angeordnet ist. Verfahrensmäßig ausgedrückt, ist somit bevorzugt vorgesehen, dass die Gasströmung durch Messung einer Auslenkung eines bzw. des zur Messeinrichtung 1 gehörenden Flügels 1.2 erfasst wird, wobei die Messung der Auslenkung auch einer Messung der Drehzahl, die ja auf einer Auslenkung beruht, entspricht.

Um dabei das Messergebnis möglichst wenig zu beeinflussen bzw. die Reibung klein zu halten, ist außerdem (siehe hierzu insbesondere die Figuren 1, 6, 7 und 11) bevorzugt vorgesehen, dass zwischen der Basis 1.1 und dem Flügel 1.2 ein Kugellager 1.6 angeordnet ist.

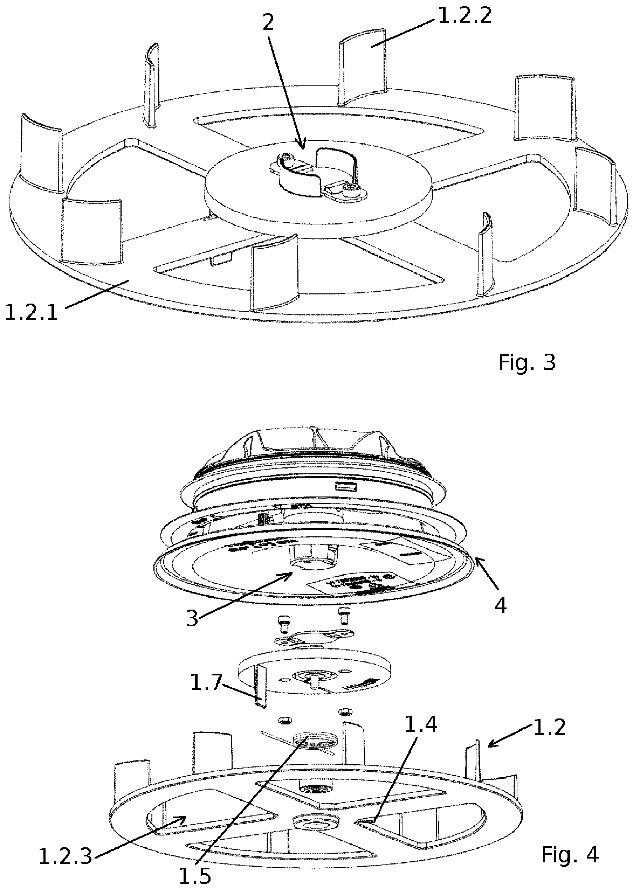

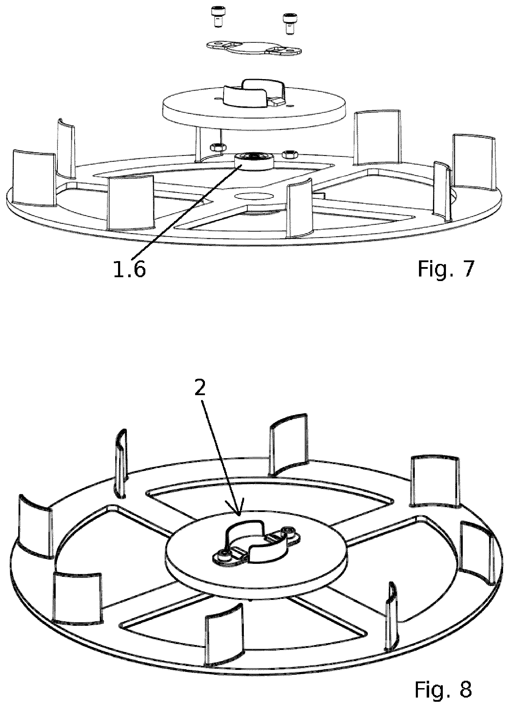

Bezüglich der eigentlichen Messmethode sind bevorzugt insgesamt vier verschiedene Varianten vorgesehen. In den Figuren 1 bis 6 ist eine erste Variante dargestellt, die man auch als die mechanische Variante bezeichnen könnte. In den Figuren 7 bis 11 ist eine zweite Variante dargestellt, die man auch als die optische Variante bezeichnen könnte. Nicht extra dargestellt, aber ebenfalls möglich sind Varianten, die man als akustische Variante oder als magnetische Variante bezeichnen könnte.

Bei der mechanischen Variante ist dabei bevorzugt vorgesehen, dass zwischen der Basis 1.1 und dem Flügel 1.2 eine einer Drehung des Flügels 1.2 entgegenwirkende Feder 1.5 angeordnet ist. Außerdem ist bevorzugt zwischen der Basis 1.1 und dem Flügel 1.2 ein eine maximale Auslenkung des Flügels 1.2 definierender Drehanschlag 1.7 angeordnet. Mit Verweis auf Figur 1 ist, noch etwas genauer betrachtet, bei dieser Variante besonders bevorzugt vorgesehen, dass die Feder 1.5 als Schraubenfeder mit einem ersten, mit der Basis 1.1 zusammenwirkenden und mit einem zweiten, mit dem Flügel 1.2 zusammenwirkenden Endschenkel 1.5.1, 1.5.2 ausgebildet ist. - Wie insgesamt leicht ersichtlich, kann bei dieser Variante die Strömung bzw. der Volumenstrom somit über die Auslenkung des Flügels 1.2 bzw. des Laufrads ermittelt werden, und zwar, noch genauer betrachtet, durch Ablesen der Position des Zeigers 1.4 auf der Skala 1.3. Eine weitere mechanische Variante kann darüber hinaus wie ein Fliehkraftpendel (siehe hierzu https://de.wikipedia.org/ w/index.php?title=Fliehkraftpendel&oldid=238339365) ausgebildet sein, dessen Auslenkung ein Maß für die Drehzahl und damit den Volumenstrom darstellt.

Bei der optischen Variante ist, wie oben bereits erwähnt, weder eine Feder noch ein Drehanschlag vorgesehen, d. h. das Laufrad ist bei dieser Lösung im Grunde frei drehend ausgebildet. Die Ermittlung der Strömung erfolgt dabei über die Erfassung, wie schnell sich der Zeiger 1.4 oberhalb der bzw. in Bezug auf die Skala 1.3 dreht, also ganz ähnlich wie dies bei einem Stroboskop an einem Schallplattenspieler (siehe auch https://de.wikipedia.org/w/index.php?title=Schallplattenspie-ler&oldid=241846454) funktioniert. Zur Auswertung kann dabei besonders bevorzugt sogar eine App auf einem Mobiltelefon mit Kamera oder dergleichen verwendet werden, d. h. letztlich kann der Benutzer über die Skala 1.3 und den Zeiger 1.4 die Strömung, insbesondere den Volumenstrom, erfassen bzw. ermitteln. Alternativ ist darüber hinaus eine optische Variante vorgesehen, bei der mittels Löcher im Flügel, einer Lichtquelle und einem Lichtsensor die Bewegung des Flügels gemessen werden kann, wobei der Lichtstrahl unterbrochen wird, wenn er nicht durch eines der besagten Löcher strahlen kann. Ebenfalls möglich ist eine Variante, bei der ein bedruckter Hintergrund zum Beispiel in schwarz-weißer Farbgebung so gestaltet ist, dass der Stroboskopieeffekt durch die in einer bestimmten Farbe gehaltenen Stege des Flügelrades im Zusammenwirken mit dem bedruckten Hintergrund die Drehzahl anzeigt.

Bei der nicht extra dargestellten akustischen Variante wird die Drehgeschwindigkeit des Flügels über ein akustisches Signal ermittelt, beispielsweise dadurch, dass ein Mikrofon an der Basis 1.1 und eine Schallquelle am Flügel 1.2 angeordnet sind. Über die Auswertung des Mikrofonsignals kann dann auf die Drehgeschwindigkeit, und damit insbesondere auf den Volumenstrom, geschlossen werden.

Bei der ebenfalls nicht extra dargestellten magnetischen Variante wird - wie bei einem Fahrradcomputer - ein magnetische Impulse erfassender Sensor an der Basis 1.1 und ein (zur Reduzierung des Massenträgheitsmoments möglichst kleiner) Magnet am Flügel 1.2 angeordnet. Aus den erfassten magnetischen Impulsen ergeben sich elektrische Spannungsimpulse und aus diesen kann auf die Drehzahl und damit auf den Volumenstrom geschlossen werden.

Die vorstehenden Ausführungen und Erläuterungen betreffen die erfindungsgemäße Gasströmungsmessvorrichtung als solche, wobei zum Beispiel durch den bereits vorstehend genannten Magneten regelmäßig durchaus auch eine Befestigung an allen handelsüblichen Gasaustrittsöffnungen möglich ist. Dabei ist ferner besonders bevorzugt vorgesehen, dass die (jeweilige) Gasaustrittsöffnung als Teil einer Gebäude-Lüftungsanlage ausgebildet ist, also zum Beispiel als eine vorzugsweise an einer Raumdecke angeordnete Gasaustrittsöffnungseinrichtung (vorzugsweise mit weiteren Strömungsfunktionsbauteilen).

Wesentlich für die besagte Kombination ist nun, dass an der Gasaustrittsöffnung eine zur Befestigungsschnittstelle 2 passende Gegenbefestigungsschnittstelle 3 vorgesehen ist. Genauer betrachtet, ist dabei besonders bevorzugt vorgesehen, dass die Gegenbefestigungsschnittstelle 3 magnetisch wirksam ausgebildet ist. Es kommen aber auch sonstige Verbindungsmöglichkeiten (Formschluss, Kraftschluss etc.) in Betracht, besonders bevorzugt ist bei alledem jedenfalls, dass die Befestigungsschnittstelle 2 und die Gegenbefestigungsschnittstelle 3 zusammen eine Schnellverbindungseinrichtung bilden, wobei ferner für eine besonders einfache Handhabung bevorzugt vorgesehen ist, dass diese Schnellverbindungseinrichtung werkzeugfrei bzw. werkzeuglos betätigbar ausgebildet ist.

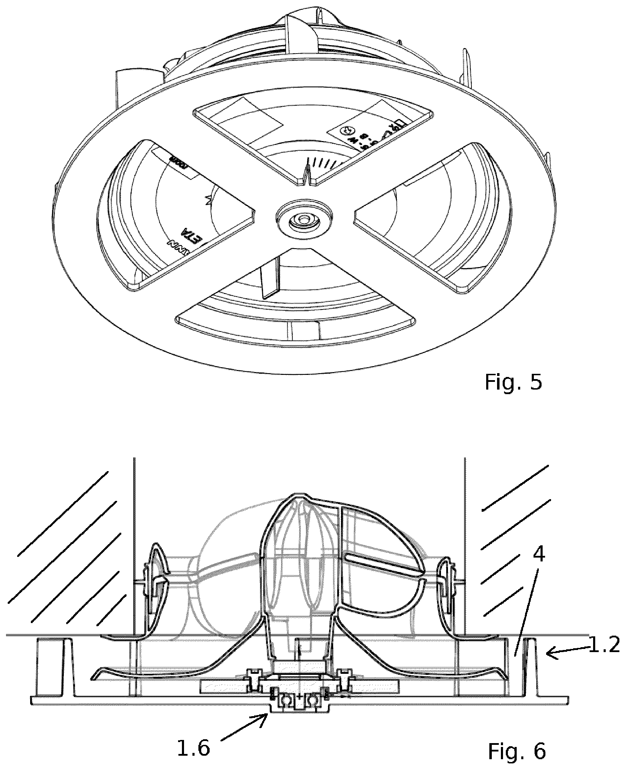

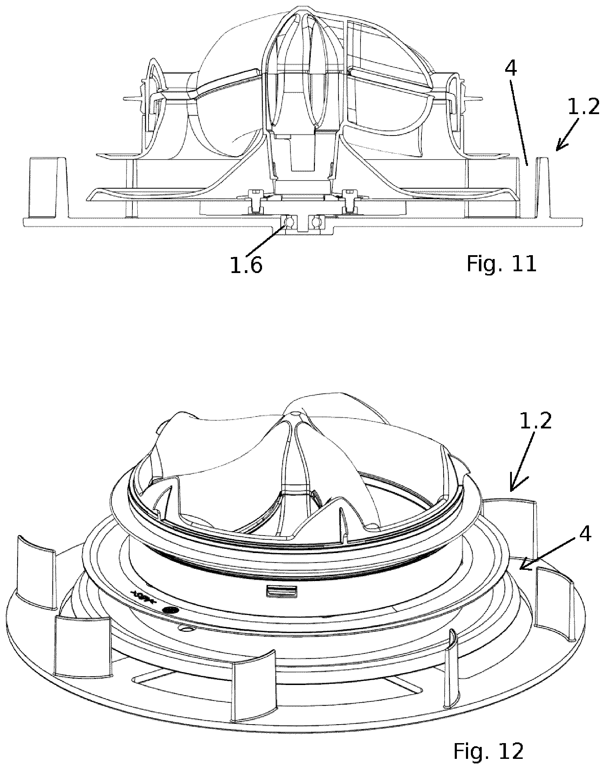

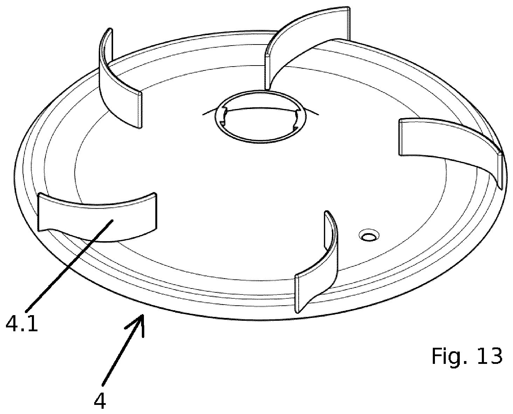

Wie besonders gut aus den Figuren 6 und 11 ersichtlich, ist ferner bevorzugt vorgesehen, dass der Gasaustrittsöffnung in Gasströmungsrichtung gesehen ein Ausströmbereich 4 nachgeschaltet ist, wobei weiterhin bevorzugt in diesem Ausströmbereich 4 der Flügel 1.2 bzw. insbesondere die Laufradschaufeln 1.2.2 der Messeinrichtung 1 angeordnet ist bzw. sind. Die Gasaustrittsöffnung ist für all dies besonders bevorzugt kreisringförmig und vorzugsweise radial von innen nach außen durchströmt bzw. durchströmbar ausgebildet. Wie aus den Figuren ersichtlich, ist weiterhin bevorzugt vorgesehen, dass die Messeinrichtung 1 bezüglich der den Flügel 1.2 umströmenden Gasströmung strömungsführungsfrei ausgebildet ist, d. h. es ist insbesondere vorgesehen, dass sich der Flügel 1.2 bzw. das Laufrad selbst nicht in bzw. innerhalb der Gasaustrittsöffnung befindet. Wie eingangs bereits erwähnt, können aber, siehe hierzu Figur 13, bevorzugt an der Gasaustrittsöffnung 4 fest stehende Leitschaufeln bzw. Leitwerkschaufeln 4.1 angeordnet sein, die dazu dienen, die Strömung gezielt auf den bzw. die Flügel 1.2 (in Figur 13 nicht dargestellt) zu lenken. Schließlich ist noch besonders bevorzugt vorgesehen (allerdings - weil leicht vorstellbar - nicht extra dargestellt), dass die Gasaustrittsöffnung bei demontierter Gasströmungsmessvorrichtung mit einer an der Gegenbefestigungsschnittstelle 3 befestigten Abdeckblende versehen ausgebildet ist, die allerdings das Ausströmen des Gases bzw. vorzugsweise der Luft natürlich nicht behindert, die aber ebenfalls eine entsprechende Befestigungsschnittstelle 2 aufweist.

### Bezugszeichenliste

- 1: Messeinrichtung
- 1.1: Basis
- 1.2: Flügel
- 1.2.1: Laufradbasis
- 1.2.2: Laufradschaufeln
- 1.2.3: Durchbrechung
- 1.3: Skala
- 1.4: Zeiger
- 1.5: Feder
- 1.5.1: Endschenkel
- 1.5.2.: Endschenkel
- 1.6: Kugellager
- 1.7: Drehanschlag
- 2: Befestigungsschnittstelle
- 3: Gegenbefestigungsschnittstelle
- 4: Ausströmbereich
- 4.1: Leitwerkschaufel

## Patentansprüche

1. Gasströmungsmessvorrichtung, umfassend eine zur Einregulierung einer Gebäude-Lüftungsanlage dienende Messeinrichtung (1) zur Erfassung einer Gasströmung,
**dadurch gekennzeichnet,**
**dass** an der einer Ermittlung des Volumenstroms dienenden Messeinrichtung (1) zu ihrer lösbaren Schnellfixierung an einer die Gasströmung bereitstellenden Gasaustrittsöffnung eine Befestigungsschnittstelle (2) vorgesehen ist.

2. Gasströmungsmessvorrichtung nach Anspruch 1,
**dadurch gekennzeichnet,**
**dass** die Messeinrichtung (1) eine Basis (1.1) mit der Befestigungsschnittstelle (2) aufweist.

3. Gasströmungsmessvorrichtung nach Anspruch 2,
**dadurch gekennzeichnet,**
**dass** die Messeinrichtung (1) einen von der Gasströmung umströmten und beweglich an der Basis (1.1) gelagerten Flügel (1.2) aufweist.

4. Gasströmungsmessvorrichtung nach Anspruch 3,
**dadurch gekennzeichnet,**
**dass** der Flügel (1.2) als radial durchströmtes Laufrad ausgebildet ist.

5. Gasströmungsmessvorrichtung nach Anspruch 4,
**dadurch gekennzeichnet,**
**dass** das Laufrad eine scheibenförmige Laufradbasis (1.2.1) und an einem Umfang der Laufradbasis (1.2.1) verteilt angeordnete Laufradschaufeln (1.2.2) aufweist.

6. Gasströmungsmessvorrichtung nach Anspruch 3 und 4,
**dadurch gekennzeichnet,**
**dass** an der Basis (1.1) eine Skala (1.3) und am Flügel (1.2) ein einen Wert auf der Skala (1.3) anzeigender Zeiger (1.4) angeordnet ist.

7. Gasströmungsmessvorrichtung nach einem der Ansprüche 3 bis 6,
**dadurch gekennzeichnet,**
**dass** die Messeinrichtung (1) bezüglich der den Flügel (1.2) umströmenden Gasströmung strömungsführungsfrei ausgebildet ist.

8. Gasströmungsmessvorrichtung nach einem der Ansprüche 3 bis 7,
**dadurch gekennzeichnet,**
**dass** zwischen der Basis (1.1) und dem Flügel (1.2) eine einer Drehung des Flügels (1.2) entgegenwirkende Feder (1.5) angeordnet ist.

9. Gasaustrittsöffnung mit einer Gasströmungsmessvorrichtung nach Anspruch 1,
**dadurch gekennzeichnet,**
**dass** an dieser eine zur Befestigungsschnittstelle (2) passende Gegenbefestigungsschnittstelle (3) vorgesehen ist.

10. Gasaustrittsöffnung nach Anspruch 9,
**dadurch gekennzeichnet,**
**dass** dieser in Gasströmungsrichtung gesehen ein Ausströmbereich (4) nachgeschaltet ist.

11. Gasaustrittsöffnung nach Anspruch 10,
**dadurch gekennzeichnet,**
**dass** im Ausströmbereich (4) ein Flügel (1.2) der Messeinrichtung (1) angeordnet ist.

12. Gasaustrittsöffnung nach einem der Ansprüche 9 bis 11,
**dadurch gekennzeichnet,**
**dass** die Befestigungsschnittstelle (2) und die Gegenbefestigungsschnittstelle (3) zusammen eine Schnellverbindungseinrichtung bilden.

13. Gasaustrittsöffnung nach Anspruch 12,
**dadurch gekennzeichnet,**
**dass** die Schnellverbindungseinrichtung werkzeugfrei betätigbar ausgebildet ist.

14. Gasaustrittsöffnung nach einem der Ansprüche 9 bis 13,
**dadurch gekennzeichnet,**
**dass** diese bei demontierter Gasströmungsmessvorrichtung mit einer an der Gegenbefestigungsschnittstelle (3) befestigten Abdeckblende versehen ausgebildet ist.

15. Verfahren zum Betrieb einer Gasströmungsmessvorrichtung nach Anspruch 1, 3 und 4,
**dadurch gekennzeichnet,**
**dass** die Gasströmung durch Messung einer Auslenkung eines zur Messeinrichtung (1) gehörenden Flügels (1.2) erfasst wird.
